# EUROPEAN PATENT APPLICATION

(11) **EP 4 625 715 A1**
(43) Date of publication of application: **01.10.2025**
(21) Application number: 24884351.8
(22) Date of filing: 30.09.2024
(51) Int. Cl.: H01R 13/10, H01M 50/296, H01M 50/572, H01M 50/579

(54) **BATTERY PACK, POWER TOOL, AND CONNECTING DEVICE**

(30) Priority: 30.10.2023 CN 202311428640
(71) Applicant: Nanjing Chervon Industry Co., Ltd., Nanjing, Jiangsu 211106 (CN)
(72) Inventor: WU, Zhiyong, Nanjing, Jiangsu 211106 (CN); ZHANG, Yuexiang, Nanjing, Jiangsu 211106 (CN); LIU, Xiaopan, Nanjing, Jiangsu 211106 (CN); GAO, Yunfei, Nanjing, Jiangsu 211106 (CN)
(74) Representative: Sun, Yiming
(86) International application number: PCT/CN2024/122690
(87) International publication number: WO 2025/092346

(57) **Abstract**

Provided are a battery pack, a power tool, and a connection apparatus. The battery pack includes a battery pack body and a battery connection apparatus. The battery connection apparatus includes a device body and multiple battery connection terminals disposed on the device body and capable of at least transmitting electrical energy. Each of the multiple battery connection terminals is configured to have a cylindrical structure and is configured to withstand a maximum current of less than or equal to 400 A.

## Description

This application claims priority to Chinese Patent Application No. 202311428640.8 filed with the China National Intellectual Property Administration (CNIPA) on Oct. 30, 2023, the disclosure of which is incorporated herein by reference in its entirety.

### TECHNICAL FIELD

The present application relates to an electrical device, for example, a battery pack, a power tool, and a connection apparatus.

### BACKGROUND

In the related art, large power tools such as mowers and snow throwers are mostly powered by battery packs so that large power tools have the advantages of portability and ease of operation. However, a battery pack is electrically connected to a power tool with inconvenience, poor reliability, and incompliance with a safety regulation requirement.

This part provides background information related to the present application, and the background information is not necessarily the existing art.

### SUMMARY

An object of the present application is to solve the problem that a battery pack is electrically connected to a power tool with inconvenience, poor reliability, and incompliance with a safety regulation requirement. Therefore, an object of the present application is to provide a battery pack, a power tool, a connection apparatus, and a connection apparatus applicable to a battery pack.

To achieve the preceding object, the present application adopts the technical solutions below.

In a first aspect, a battery pack is provided. The battery pack includes a battery pack body and a battery connection apparatus. The battery connection apparatus includes a device body and multiple battery connection terminals disposed on the device body and capable of at least transmitting electrical energy. Each of the multiple battery connection terminals is configured to have a cylindrical structure and is configured to withstand a maximum current of less than or equal to 400 A.

In some examples, each of the multiple battery connection terminals is configured to output a rated current of greater than or equal to 120 A.

In some examples, the multiple battery connection terminals include two power terminals, three signal terminals, and a grounding terminal, where the three signal terminals are in a triangular arrangement, the two power terminals are disposed on two sides of the three signal terminals, and the grounding terminal is disposed at the central position among the three signal terminals.

In some examples, one end of each of the two power terminals and one end of each of the three signal terminals are each connected to the device body, and the other end of each of the two power terminals is higher than the other end of each of the three signal terminals.

In some examples, the device body is formed with a connection portion and multiple receiving portions with receiving cavities, where the connection portion is mounted to the battery pack body, the multiple battery connection terminals are received in the receiving cavities in a one-to-one correspondence, and the shape of each of the receiving cavities is adapted to the shape of a respective one of the multiple battery connection terminals.

In some examples, at least one of the multiple receiving portions forms an error prevention mechanism.

In some examples, the cross-sectional area of the device body is less than or equal to 4000 mm².

In some examples, the device body is provided with a guide mechanism, and the guide direction of the guide mechanism is parallel to the extension direction of each of the multiple battery connection terminals.

In some examples, an insulating column is disposed in each of the multiple battery connection terminals, and the center line of the insulating column is parallel to the center line of each of the multiple battery connection terminals.

In a second aspect, a power tool is provided. The power tool includes a tool body and a tool connection apparatus. The tool connection apparatus includes an apparatus body and multiple tool connection terminals disposed on the apparatus body and capable of at least transmitting electrical energy. Each of the multiple tool connection terminals is configured to have a columnar structure and is configured to withstand a maximum current of less than or equal to 400 A.

In a third aspect, a connection apparatus is provided, where the connection apparatus is mounted to a battery pack for a power tool. The connection apparatus includes a device body and multiple battery connection terminals disposed on the device body and capable of at least transmitting electrical energy between the battery pack and the power tool. Each of the multiple battery connection terminals is configured to have a cylindrical structure and is configured to withstand a maximum current of less than or equal to 400 A.

In a fourth aspect, a connection apparatus is provided, where the connection apparatus is mounted to a battery pack for a power tool. The connection apparatus includes a device body and multiple battery connection terminals capable of at least transmitting electrical energy between the battery pack and the power tool. The device body is provided with multiple receiving cavities that are mutually independent, and the multiple battery connection terminals are disposed in the multiple receiving cavities in a one-to-one correspondence.

In a fifth aspect, a connection apparatus applicable to a battery pack is provided. The connection apparatus includes a device body and multiple battery connection terminals disposed on the device body. Each of the multiple battery connection terminals is configured to have a cylindrical structure. A first sealing structure is disposed at the joint between the device body and the battery pack.

In some examples, a second sealing structure is disposed between a root of each of the multiple battery connection terminals and the device body.

In some examples, the first sealing structure is a sealing gasket.

In some examples, the device body is in an interference fit with the battery pack.

The present application has the benefits below. The device body is mounted to the battery pack for a power tool, and a male connector is mounted on a battery compartment of the power tool. The connection terminal is configured to have a cylindrical structure, and the male connector includes a male terminal having a columnar structure adapted to the cylindrical structure. The male terminal is plugged into the connection terminal to implement an electrical connection. Thus, the battery pack is electrically connected to the power tool to power the power tool, and the connection is convenient and reliable. The male terminal having the columnar structure and the connection terminal having the cylindrical structure have large cross-sectional areas, which improves structural reliability and the capability to withstand a current, that is, 400 A and meets a safety regulation requirement of a large battery pack for powering a power tool.

### BRIEF DESCRIPTION OF DRAWINGS

FIG. 1 is a schematic view showing that a battery pack is mounted to a battery compartment of a power tool according to an example of the present application;
FIG. 2 is a schematic view showing that a battery connection apparatus is mounted to a battery pack according to an example of the present application;
FIG. 3 is a schematic view showing that a tool connection apparatus is mounted to a battery compartment according to an example of the present application;
FIG. 4 is a front view of a battery connection apparatus according to an example of the present application;
FIG. 5 is a schematic view of a battery connection apparatus according to an example of the present application;
FIG. 6 is another front view of a battery connection apparatus according to an example of the present application;
FIG. 7 is a sectional view of FIG. 6 along A-A;
FIG. 8 is a schematic view of a tool connection apparatus according to an example of the present application;
FIG. 9 is a partial schematic view showing that a tool connection apparatus is mounted to a battery compartment according to an example of the present application;
FIG. 10 is a schematic view of a first tool connection terminal according to an example of the present application;
FIG. 11 is a schematic view of a second tool connection terminal according to an example of the present application;
FIG. 12 is a schematic view of a third tool connection terminal according to an example of the present application; and
FIG. 13 is a schematic view showing a battery pack and various power tools according to an example of the present application.

### Reference list

- 100: battery connection apparatus
- 200: battery pack
- 300: battery compartment
- 400: tool connection apparatus
- 401: tool connection terminal
- 4011: horizontal stripe
- 4012: vertical stripe
- 4013: diagonal stripe
- 402: cable
- 403: apparatus body
- 404: guide column
- 405: mounting cavity
- 406: drainage hole
- 500: power tool
- 500a: riding mower
- 500b: snow thrower
- 200c: all-terrain vehicle
- 500d: push mower
- 500e: mobile power station
- 600: third sealing structure
- 1: device body
- 11: connection portion
- 111: mounting hole
- 12: insertion slot
- 13: receiving cavity
- 14: receiving portion
- 2: battery connection terminal
- 21: power terminal
- 22: signal terminal
- 23: grounding terminal
- 3: guide mechanism
- 31: guide groove
- 32: guide rib
- 4: error prevention mechanism
- 5: insulating column
- 6: first sealing structure
- 7: second sealing structure
- 8: locking mechanism
- 81: latch
- 82: first metal piece
- 83: second metal piece

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

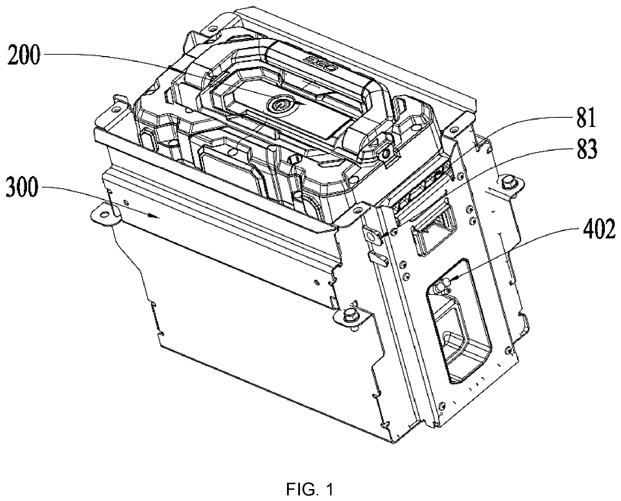

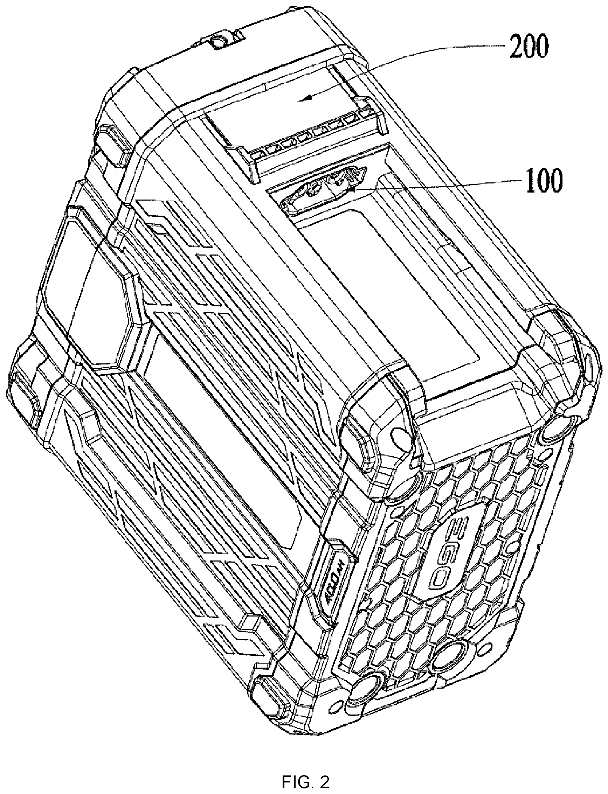

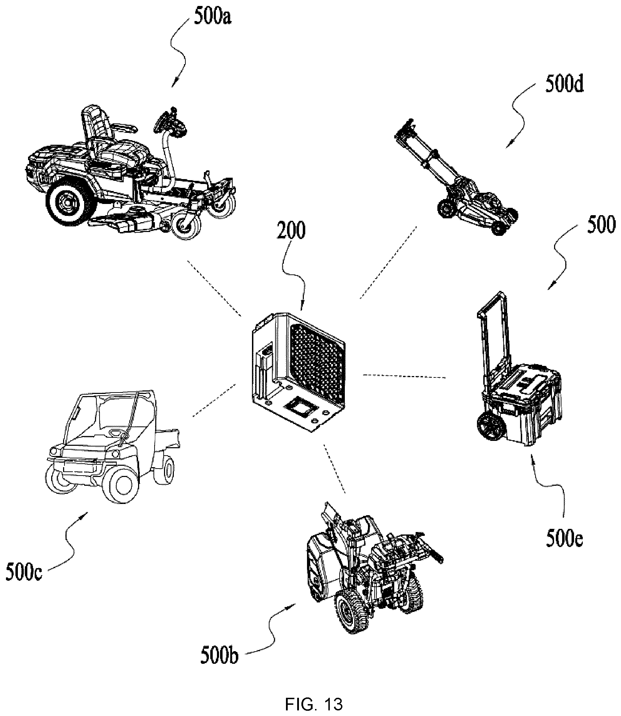

As shown in FIGS. 1 to 9 and FIG. 13, this example provides a battery pack 200. The battery pack 200 is mountable to a power tool 500 to power the power tool. The power tool 500 may be a wheeled tool, a garden tool, or the like. FIG. 13 shows several common wheeled tools such as a riding mower 500a, a snow thrower 500b, an all-terrain vehicle 500c, and a push mower 500d. It is to be noted that other common wheeled devices that can be powered by the battery pack 200 are also within the scope of the present application, for example, a mobile power station 500e, a wheeled fan, a wheeled illumination apparatus, a wheeled blower, and a cleaning vehicle. In this example, the power tool may also be referred to as an outdoor wheeled device, an outdoor wheeled tool, a wheeled tool, or the like. The term "wheeled" can be understood as follows: a tool has a walking wheel set that supports a tool body, and under the drive of an electric motor, the walking wheel set can drive the tool body to move.

In this example, the nominal voltage of the battery pack 200 is greater than or equal to 30 V. Of course, it is to be understood that the nominal voltage of the battery pack 200 may be greater than or equal to 20 V and less than or equal to 100 V, or the nominal voltage of the battery pack 200 is greater than or equal to 36 V and less than or equal to 80 V, or the nominal voltage of the battery pack 200 may be greater than or equal to 40 V and less than or equal to 60 V. Alternatively, the nominal voltage of the battery pack 200 may be greater than or equal to 100 V and less than or equal to 800 V. It is to be understood that the nominal voltage of the battery pack 200 may be 20 V, 24 V, 36 V, 40 V, 48 V, 56 V, 60 V, 80 V, 100 V, 200 V, or 300 V. This allows the voltages of different battery packs of the outdoor wheeled device using multiple battery packs 200 to be compatible with other voltage platforms of the battery packs. Thus, the total energy of the battery packs in the wheeled device can be increased. When at least two battery packs 200 are arranged in the outdoor wheeled device, the nominal voltages of the at least two battery packs 200 may be the same or different.

The weight of the battery pack 200 is greater than or equal to 10 kg. Alternatively, the weight of the battery pack 200 is greater than or equal to 15 kg. Alternatively, the weight of the battery pack 200 is greater than or equal to 16 kg. Alternatively, the weight of the battery pack 200 is greater than or equal to 17 kg. Alternatively, the weight of the battery pack 200 is greater than or equal to 18 kg. Alternatively, the weight of the battery pack 200 is greater than or equal to 19 kg. Alternatively, the weight of the battery pack 200 is greater than or equal to 20 kg. The gravimetric energy density of the battery pack is greater than or equal to 100 wh/kg and less than or equal to 200 wh/kg. Alternatively, the gravimetric energy density of the battery pack 200 is greater than or equal to 120 wh/kg and less than or equal to 200 wh/kg. Alternatively, the gravimetric energy density of the battery pack 200 is greater than or equal to 100 wh/kg and less than or equal to 150 wh/kg. Alternatively, the gravimetric energy density of the battery pack 200 is greater than or equal to 150 wh/kg and less than or equal to 200 wh/kg. The volumetric energy density of the battery pack 200 is greater than or equal to 100 wh/L and less than or equal to 200 wh/L. Alternatively, the volumetric energy density of the battery pack 200 is greater than or equal to 150 wh/L and less than or equal to 200 wh/L. Alternatively, the volumetric energy density of the battery pack 200 is greater than or equal to 90 wh/L and less than or equal to 200 wh/L. Alternatively, the volumetric energy density of the battery pack 200 is greater than or equal to 100 wh/L and less than or equal to 150 wh/L. A relatively high gravimetric energy density or volumetric energy density enables the outdoor wheeled device 100 mounted with a battery pack of the same volume or weight to obtain more energy, thereby ensuring the endurance of the wheeled device. For example, the requirement for the wheeled device to operate outdoors for half a day can be met, and the size or load requirement of the device can also be met.

The total energy of the battery pack 200 is greater than or equal to 1 kW· h and less than or equal to 8 kW·h. Alternatively, the total energy of the battery pack 200 is greater than or equal to 1 kW·h and less than or equal to 4 kW·h. Alternatively, the total energy of the battery pack 200 is greater than or equal to 500 W·h and less than or equal to 2 kW·h. Alternatively, the total energy of the battery pack 200 is greater than or equal to 2 kW·h and less than or equal to 6 kW·h. Alternatively, the total energy of the battery pack 200 is greater than or equal to 4 kW·h and less than or equal to 8 kW·h. Alternatively, the total energy of the battery pack 200 is greater than or equal to 300 W·h and less than or equal to 8 kW·h. Thus, when at least one battery pack 200 in the outdoor wheeled device 100 is in a fully charged state, the outdoor wheeled device can mow for 4 to 6 hours by using the battery pack 200.

The rated discharge power of the battery pack 200 is greater than or equal to 2 kW and less than or equal to 8 kW. Alternatively, the rated discharge power of the battery pack 200 is greater than or equal to 3 kW and less than or equal to 8 kW. Alternatively, the rated discharge power of the battery pack 200 is greater than or equal to 4 kW and less than or equal to 8 kW. Alternatively, the rated discharge power of the battery pack 200 is greater than or equal to 5 kW and less than or equal to 8 kW. In this example, the maximum continuous discharge power of the battery pack 200 is greater than or equal to 300 kW and less than or equal to 8 kW. Alternatively, the maximum continuous discharge power of the battery pack 200 is greater than or equal to 3 kW and less than or equal to 15 kW. Alternatively, the maximum continuous discharge power of the battery pack 200 is greater than or equal to 4 kW and less than or equal to 10 kW. Alternatively, the maximum continuous discharge power of the battery pack 200 is greater than or equal to 2 kW and less than or equal to 10 kW. Thus, the battery pack 200 placed in the outdoor wheeled device has higher discharge efficiency. It is to be noted that the maximum continuous discharge power refers to discharge power of the outdoor wheeled device during normal operation. However, abnormally large instantaneous discharge power occurring in the case where the outdoor wheeled device stalls or cuts some stones does not include the maximum continuous discharge power in this example.

In an example, the power tool 500 may be provided with a battery compartment 300 for mounting or fixing the battery pack 200. The battery compartment 300 may be closed or semi-closed, and the battery pack 200 can be movably or immovably connected to the battery compartment 300 or can be pluggably mounted to the battery compartment 300.

Connections between the battery pack 200 and the power tool 500 include mechanical and electrical connections. For the mechanical connection, the battery pack 200 may be mounted to the power tool 500 in a mechanical fixing or bearing manner. For the electrical connection, the battery pack 200 may be connected to the power tool 500 through cables or electrical connectors. However, when the cables are used for the electrical connection, the cable connection and the mechanical connection are performed separately, resulting in inconvenient mounting. Moreover, the cables are welded together, resulting in inconvenient assembly and disassembly. When the electrical connectors are used for the electrical connection, one of male and female connectors is connected to the battery pack 200, and the other is connected to the power tool 500. During assembly, the male and female connectors are inserted into each other to implement the electrical connection with convenience. However, the male and female connectors are connected to each other through pin-like structures such as pins or sheet-like structures such as metal sheets, which withstand a limited amount of current and do not meet a safety regulation requirement for a large battery pack and the power tool 500. Additionally, these structures have poor structural strength and may break under conditions such as vibration, resulting in an unreliable connection.

This example provides a battery pack including a battery pack body and a battery connection apparatus 100 disposed on the battery pack body. The battery connection apparatus 100 includes a device body 1 and multiple battery connection terminals 2 disposed on the device body 1 and capable of at least transmitting electrical energy. Each of the battery connection terminals 2 is configured to have a cylindrical structure and is configured to withstand a maximum current of less than or equal to 400 A.

This example provides a power tool including a tool body and a tool connection apparatus 400. The tool connection apparatus 400 includes an apparatus body 403 and multiple tool connection terminals 401 disposed on the apparatus body 403 and capable of at least transmitting electrical energy. Each of the tool connection terminals 401 is configured to have a columnar structure and is configured to withstand a maximum current of less than or equal to 400 A. The battery connection apparatus 100 and the tool connection apparatus 400 are used in conjunction. The cylindrical structure of the battery connection terminal 2 is adapted to the columnar structure of the tool connection terminal 401. One end of the tool connection terminal 401 is inserted into the battery connection terminal 2, and the other end of the tool connection terminal 401 is connected to the tool body through cables 402. Thus, electrical energy is transmitted between the battery pack 200 and the power tool 500 so that the battery pack 200 is electrically connected to the power tool 500 to power the power tool 500, and the connection is convenient and reliable.

Compared with terminals with pin-like structures or sheet-like structures in the related art, the tool connection terminal 401 with the columnar structure and the battery connection terminal 2 with the cylindrical structure have large cross-sectional areas, which improves structural reliability and meets the safety regulation requirement.

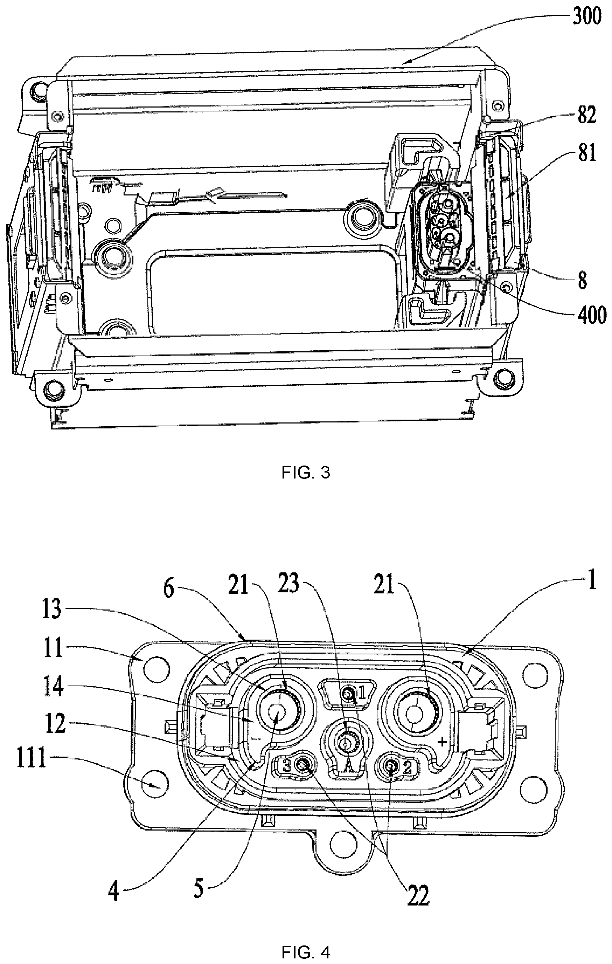

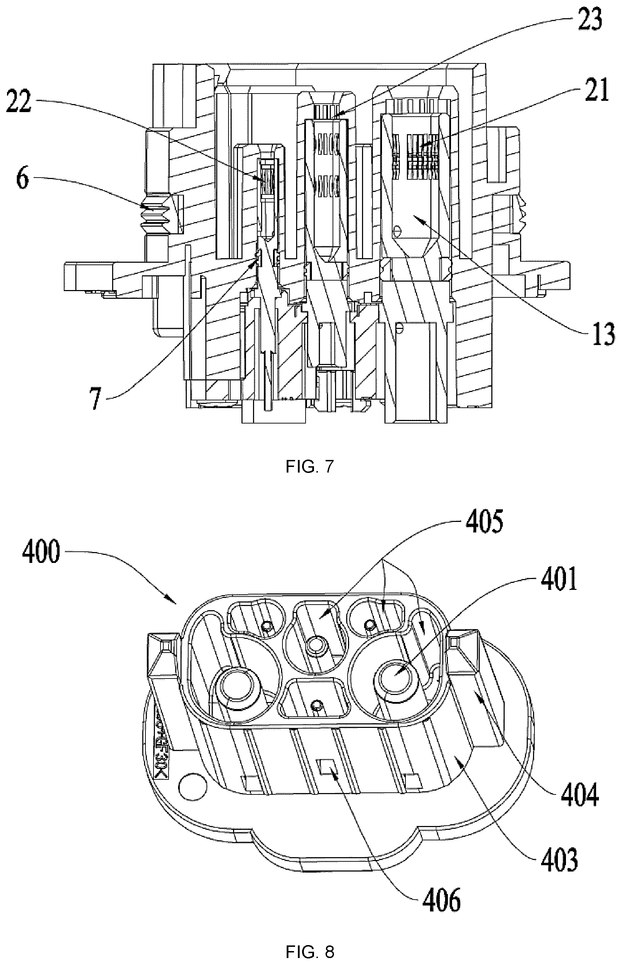

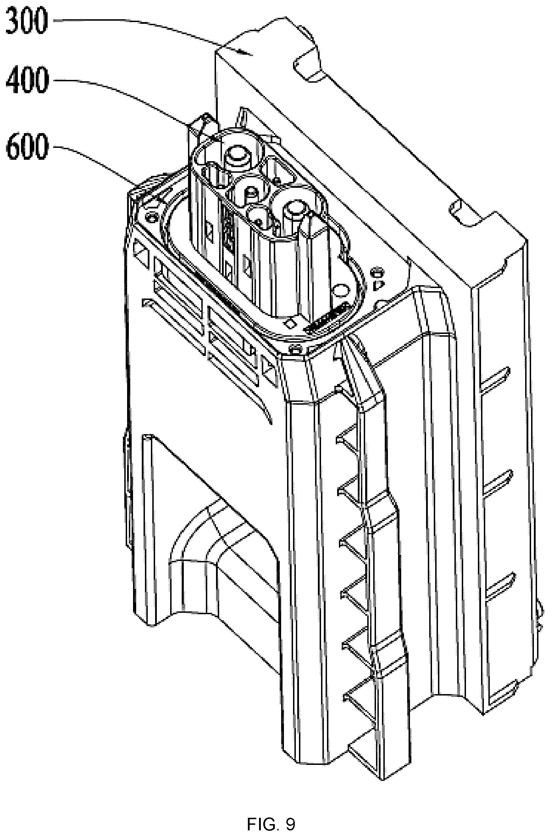

As shown in FIGS. 4 to 7, the battery connection terminal 2 is configured to have the cylindrical structure and is configured to withstand the maximum current of less than or equal to 400 A. For example, the maximum current may be 330 A, 340 A, 350 A, 360 A, 370 A, 380 A, or 390 A. Thus, the capability of the battery connection terminal 2 to withstand a current is improved so that the safety regulation requirement for the large battery pack 200 for powering the power tool 500 is met. In an example, the battery connection terminal 2 is configured to output a rated current of greater than or equal to 120 A, which also improves the capability of the battery connection terminal 2 to withstand a current. Similarly, as shown in FIGS. 8 and 9, the tool connection terminal 401 is configured to have the columnar structure and is configured to withstand the maximum current of less than or equal to 400 A. For example, the maximum current may be 330 A, 340 A, 350 A, 360 A, 370 A, 380 A, or 390 A. Thus, the capability of the tool connection terminal 401 to withstand a current is improved so that the safety regulation requirement for the large battery pack 200 for powering the power tool 500 is met. In an example, the tool connection terminal 401 is configured to output a rated current of greater than or equal to 120 A, which also improves the capability of the tool connection terminal 401 to withstand a current.

The hole diameter of the battery connection terminal 2 and the diameter of the tool connection terminal 401 may be set and the material of the battery connection terminal 2 may be configured through tests, calculations, or the like, which are not limited.

As shown in FIGS. 4 to 7, the multiple battery connection terminals 2 include two power terminals 21, three signal terminals 22, and a grounding terminal 23. The power terminals 21 are configured to provide a power supply, the signal terminals 22 are configured to transmit data signals, and the grounding terminal 23 is connected to a grounding body to provide a good grounding condition. The three signal terminals 22 are in a triangular arrangement, the two power terminals 21 are disposed on two sides of the three signal terminals 22, and the grounding terminal 23 is disposed at the central position among the three signal terminals 22. Through the preceding arrangement, the multiple battery connection terminals 2 are centrally arranged with a compact structure. In addition, the manner in which the battery connection terminals 2 are arranged allows the battery connection apparatus 100 to form an asymmetrical structure, which prevents the battery connection apparatus 100 from being inserted in an incorrect direction during the connection to the tool connection apparatus 400, facilitates identification, and improves safety and reliability.

The cross-sectional area of the device body 1 is less than or equal to 4000 mm². The multiple battery connection terminals 2 are arranged on the device body 1 with the preceding cross-sectional area, thereby limiting the total area occupied by the battery connection terminals 2. Thus, the multiple battery connection terminals 2 are centrally arranged with the compact structure. The cross section is rectangular, racetrack-shaped, elliptical, or quasi-elliptical, and the shape of the cross section is not limited. The length M of the cross section is less than or equal to 80 mm, and the width of the cross section is less than or equal to 50 mm.

As shown in FIG. 4, the device body 1 is formed with a connection portion 11 and multiple receiving portions 14 with receiving cavities 13. The connection portion 11 is mounted to the battery pack 200. The battery connection terminals 2 are received in the receiving cavities 13 in a one-to-one correspondence. The shape of each of the receiving cavities 13 is adapted to the shape of a respective one of the battery connection terminals 2. The signal terminals 22, the power terminals 21, and the grounding terminal 23 are disposed in different independent receiving cavities 13, thereby increasing the safety distance between different battery connection terminals 2. The connection portion 11 is provided with mounting holes 111. Fasteners such as screws are inserted through the mounting holes 111 to be connected to the battery pack 200 such that the battery connection apparatus 100 is mounted on the battery pack 200.

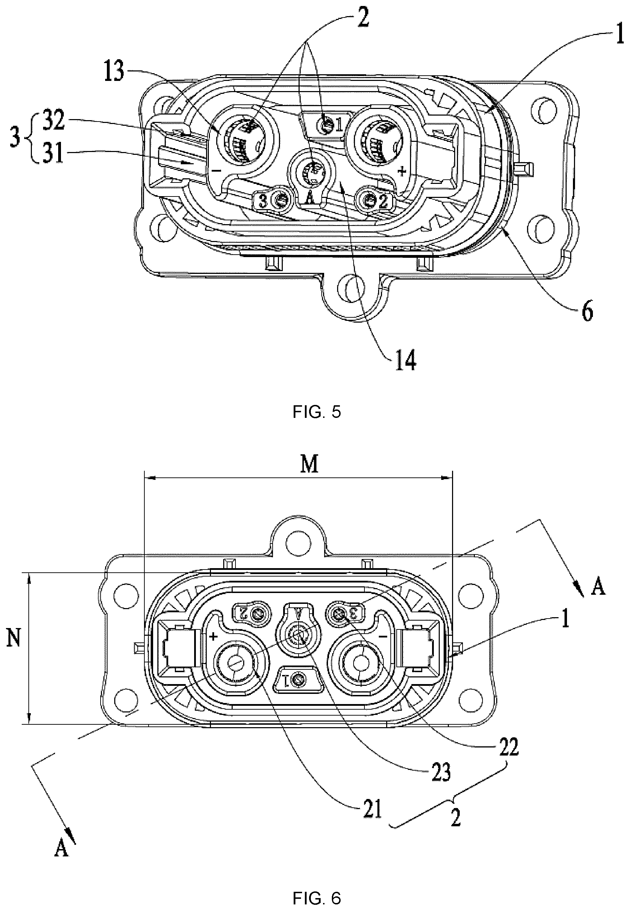

As shown in FIGS. 6 and 7, one end of each of the power terminals 21 and one end of each of the signal terminals 22 are each connected to the device body 1, and the other end of each of the power terminals 21 is higher than the other end of each of the signal terminals 22. When the tool connection apparatus 400 is inserted into the battery connection apparatus 100 to mate with the battery connection apparatus 100, the tool connection terminals 401 that mate with the power terminals 21 are first in contact with the power terminals 21, and the tool connection terminals 401 that mate with the signal terminals 22 are subsequently in contact with the signal terminals 22. Through the height difference between the power terminals 21 and the signal terminals 22, the sequence in which the power terminals 21 and the signal terminals 22 are in contact with the tool connection terminals 401 separately is ensured, thereby achieving safe protection during charging and discharging. In an example, the height of the grounding terminal 23 is between the height of each of the power terminals 21 and the height of each of the signal terminals 22. The height of the grounding terminal 23 is slightly lower than the height of each of the power terminals 21.

As shown in FIG. 4, at least one receiving portion 14 forms an error prevention mechanism 4. For example, the receiving portion 14 is provided with a protrusion, a depression, or the like to form the error prevention mechanism 4. Thus, the battery connection apparatus 100 has an irregular asymmetrical structure, which prevents the tool connection apparatus 400 from being inserted into the battery connection apparatus 100 incorrectly, facilitates the identification, and improves the safety and the reliability. In an example, a protrusion is provided on the periphery of the receiving portion 14 configured to receive a power terminal 21. In other examples, a protrusion or the like may be provided on the periphery of a receiving portion 14 configured to receive a signal terminal 22 or the grounding terminal 23, which is not limited.

As shown in FIGS. 4 and 8, the device body 1 is provided with an insertion slot 12, the receiving portions 14 are disposed in the insertion slot 12, the tool connection apparatus 400 includes an apparatus body 403, and the apparatus body 403 is provided with mounting cavities 405. The mounting cavities 405 are adapted to the receiving portions 14, and the tool connection terminals 401 are correspondingly disposed in the mounting cavities 405. When the battery connection apparatus 100 and the tool connection apparatus 400 are connected to each other, the apparatus body 403 is inserted into the insertion slot 12, the receiving portions 14 are inserted into the mounting cavities 405, and the tool connection terminals 401 are inserted into the battery connection terminals 2.

The direction in which the battery pack 200 is inserted into the battery compartment 300 is the same as the direction in which the tool connection terminals 401 are inserted into the battery connection terminals 2. That is, when the battery pack 200 is inserted into the battery compartment 300, the tool connection terminals 401 are inserted into the battery connection terminals 2. Thus, it is further convenient to mount and electrically connect the battery pack 200 to the power tool 500, and assembly steps are reduced.

As shown in FIGS. 1 and 3, a locking mechanism 8 is disposed at each of the entrance and exit ends of the battery compartment 300. The locking mechanism 8 has a locking function and a locking feedback function. The locking mechanism 8 includes a latch 81 and an interlocking switch disposed on the latch 81. The latch 81 is configured to lock the battery pack 200. To remove the battery pack 200 from the battery compartment 300, the latch 81 must first be unlocked, and then the battery pack 200 is removed. The interlocking switch on the latch 81 is configured to provide locking feedback to confirm the locked or unlocked state. Specifically, the interlocking switch is configured to: cause a circuit to be in an off state before the battery pack 200 is removed; cause the circuit to be open after the latch 81 is unlocked; cause the circuit to be closed after the latch 81 is locked; and provide power-off protection when the battery pack 200 is removed, thereby reducing sparks. Exemplarily, the latch 81 is provided with a first metal piece 82, and the battery compartment 300 is provided with a second metal piece 83. When the latch 81 is configured to lock the battery pack 200, the first metal piece 82 and the second metal piece 83 are in contact to form the closed circuit. When the latch 81 unlocks the battery pack 200, the first metal piece 82 and the second metal piece 83 are separated to form the open circuit.

As shown in FIGS. 5 and 8, the device body 1 is provided with a guide mechanism 3, and the guide direction of the guide mechanism 3 is parallel to the extension direction of each of the battery connection terminals 2. The tool connection apparatus 400 is inserted into the battery connection apparatus 100 along the guide mechanism 3, thereby improving the precision with which the battery connection apparatus 100 is connected to the tool connection apparatus 400. Exemplarily, the guide mechanism 3 includes a guide groove 31 formed on the device body 1. The guide groove 31 is adaptable to a guide column 404 formed on the device body 403. The guide column 404 is inserted into the guide groove 31 and is connected to the apparatus body 403 to provide relatively high mechanical strength. Guide ribs 32 are provided on the sidewalls of the guide groove 31. The guide ribs 32 are in contact with the guide column 404, thereby reducing the contact area and improving smoothness. Two guide columns 404 are provided, and the multiple tool connection terminals 401 are located between the two guide columns 404.

As shown in FIG. 4, an insulating column 5 is disposed in each of the battery connection terminals 2, and the center line of the insulating column 5 is parallel to the center line of each of the battery connection terminals 2. Thus, the protection for fingers against touching the battery connection terminals 2 is formed, thereby further improving the safety and the reliability. The insulating column 5 may be a plastic column or the like. Correspondingly, a respective one of the tool connection terminals 401 is provided with an avoidance hole, and the insulating column 5 is inserted into the avoidance hole.

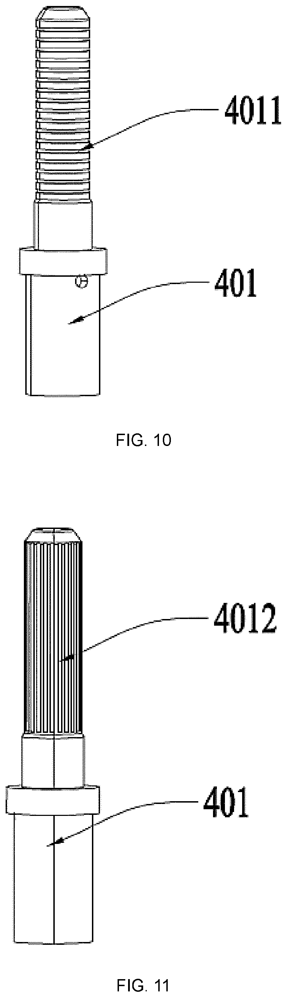

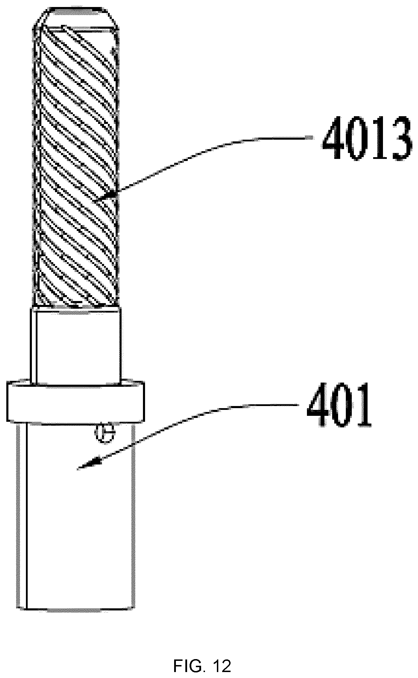

As shown in FIGS. 10 to 12, the portion of the tool connection terminal 401 inserted into the battery connection terminal 2 is an insertion terminal portion. Stripes are provided on the periphery of the insertion terminal portion to increase the frictional force between the insertion terminal portion and the battery connection terminal 2. In the process where the insertion terminal portion is inserted into or removed from the battery connection terminal 2, dirt such as dust on the battery connection terminal 2 can be cleaned through the insertion terminal portion. The stripes may be horizontal stripes 4011, vertical stripes 4012, diagonal stripes 4013, or stripes in other irregular shapes, which is not limited.

As shown in FIG. 8, the apparatus body 403 is provided with drainage holes 406. Each of the drainage holes 406 communicates with a respective mounting cavity 405 to prevent water accumulation inside. A sealing gasket is provided between the tool connection terminal 401 and the apparatus body 403 to achieve waterproof and dustproof effects. The apparatus body 403 and the battery compartment 300 are sealingly connected to each other through a third sealing structure 600. Exemplarily, the third sealing structure 600 is a sealing gasket, which achieves waterproof and dustproof effects.

As shown in FIGS. 1 to 9, this example provides a connection apparatus mounted to the battery pack 200 for the power tool 500. The specific structure is the same as that of the battery connection apparatus in a first example. The details are not repeated. The device body 1 may be formed on the battery pack body or may be detachably connected to the battery pack body.

As shown in FIGS. 1 to 9, this example provides a connection apparatus mounted to the battery pack 200 for the power tool 500. The connection apparatus includes a device body 1 and multiple battery connection terminals 2. The battery connection terminals 2 can at least transmit electrical energy between the battery pack 200 and the power tool. The structure and usage of the connection apparatus are substantially the same as those of the preceding example. The similarities are not repeated. The difference therebetween lies in that the device body 1 is provided with multiple receiving cavities 13 that are mutually independent. The battery connection terminals 2 are disposed in the receiving cavities 13 in a one-to-one correspondence. The battery connection terminals 2 are disposed in different independent receiving cavities 13 so that the safety distance between different battery connection terminals 2 is increased. In an example, the device body 1 is provided with multiple receiving portions 14, and the receiving cavities 13 are provided in the receiving portions 14. The receiving portions 14 are spaced apart from each other, further increasing the safety distance between the different battery connection terminals 2.

As shown in FIGS. 1 to 9, this example provides a connection apparatus applicable to a battery pack. The connection apparatus includes a device body 1 and multiple battery connection terminals 2. The battery connection terminals 2 are disposed on the device body 1. Each of the battery connection terminals 2 is configured to have a cylindrical structure. The structure and usage of the connection apparatus are substantially the same as those of the previous example. The similarities are not repeated. The difference therebetween lies in that a first sealing structure 6 is disposed at the joint between the device body 1 and the battery pack 200, achieving waterproof and dustproof effects. The waterproof level of the connection apparatus and the battery pack 200 reaches IP67. In an example, the first sealing structure 6 is a sealing gasket. The sealing gasket is mounted in an annular groove on the outer side of the device body 1. When the device body 1 is mounted to the battery pack 200, the sealing gasket is clamped between the device body 1 and the battery pack 200 to implement sealing. In another example, the device body 1 is in an interference fit with the battery pack 200 to form a sealed connection.

A second sealing structure 7 is disposed between a root of each of the battery connection terminals 2 and the device body 1. Exemplarily, a sealing gasket is disposed between each of the battery connection terminals 2 and the device body 1 to achieve waterproof and dustproof effects. The waterproof level of the inside of the connection apparatus reaches IP67.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack, comprising:
a battery pack body; and
a battery connection apparatus (100) configured to be at least connectable to a power tool to power the power tool or connected to a charging device to charge the battery pack;
wherein the battery connection apparatus (100) comprises:
a device body (1); and
a plurality of battery connection terminals (2) disposed on the device body (1) and capable of at least transmitting electrical energy;
wherein each of the plurality of battery connection terminals (2) is configured to have a cylindrical structure and is configured to withstand a maximum current of less than or equal to 400 A.

2. The battery pack according to claim 1, wherein each of the plurality of battery connection terminals (2) is configured to output a rated current of greater than or equal to 120 A.

3. The battery pack according to claim 1, wherein the plurality of battery connection terminals (2) comprise two power terminals (21), three signal terminals (22), and a grounding terminal (23), the three signal terminals (22) are in a triangular arrangement, the two power terminals (21) are disposed on two sides of the three signal terminals (22), and the grounding terminal (23) is disposed at a central position among the three signal terminals (22).

4. The battery pack according to claim 3, wherein one end of each of the two power terminals (21) and one end of each of the three signal terminals (22) are each connected to the device body (1), and the other end of each of the two power terminals (21) is higher than the other end of each of the three signal terminals (22).

5. The battery pack according to claim 1, wherein the device body (1) is formed with a connection portion (11) and a plurality of receiving portions (14) with receiving cavities (13), the connection portion (11) is mounted to the battery pack body, the plurality of battery connection terminals (2) are received in the receiving cavities (13) in a one-to-one correspondence, and a shape of each of the receiving cavities (13) is adapted to a shape of a respective one of the plurality of battery connection terminals (2).

6. The battery pack according to claim 5, wherein at least one of the plurality of receiving portions (14) forms an error prevention mechanism (4).

7. The battery pack according to any one of claims 1 to 5, wherein a cross-sectional area of the device body (1) is less than or equal to 4000 mm².

8. The battery pack according to claim 1, wherein the device body (1) is formed with a guide mechanism (3), and a guide direction of the guide mechanism (3) is parallel to an extension direction of each of the plurality of battery connection terminals (2).

9. The battery pack according to claim 1, wherein an insulating column (5) is disposed in each of the plurality of battery connection terminals (2), and a center line of the insulating column (5) is parallel to a center line of each of the plurality of battery connection terminals (2).

10. The battery pack according to claim 1, wherein the device body (1) is provided with a plurality of receiving cavities (13) that are mutually independent, and the plurality of battery connection terminals (2) are disposed in the plurality of receiving cavities (13) in a one-to-one correspondence.

11. The battery pack according to claim 1, wherein each of the plurality of battery connection terminals (2) is configured to have a cylindrical structure, and a first sealing structure (6) is disposed at a joint between the device body (1) and the battery pack.

12. The battery pack according to claim 1, wherein a second sealing structure (7) is disposed between a root of each of the plurality of battery connection terminals (2) and the device body (1).

13. The connection apparatus applicable to the battery pack according to claim 12, wherein a first sealing structure (6) is a sealing gasket.

14. The connection apparatus applicable to the battery pack according to claim 12, wherein the device body (1) is in an interference fit with the battery pack.

15. A power tool, comprising:
a tool body; and
a tool connection apparatus (400);
wherein the tool connection apparatus (400) comprises:
an apparatus body (403); and
a plurality of tool connection terminals (401) disposed on the apparatus body (403) and capable of at least transmitting electrical energy;
wherein each of the plurality of tool connection terminals (401) is configured to have a columnar structure and is configured to withstand a maximum current of less than or equal to 400 A.

16. A connection apparatus mounted to a battery pack (200) for a power tool (500), comprising:
a device body (1); and
a plurality of battery connection terminals (2) capable of at least transmitting electrical energy between the battery pack (200) and the power tool (500);
wherein the device body (1) is provided with a plurality of receiving cavities (13) that are mutually independent, and the plurality of battery connection terminals (2) are disposed in the plurality of receiving cavities (13) in a one-to-one correspondence.

17. The connection apparatus according to claim 16, wherein each of the plurality of battery connection terminals (2) is configured to have a cylindrical structure, and a first sealing structure (6) is disposed at a joint between the device body (1) and the battery pack.

18. The connection apparatus applicable to the battery pack according to claim 17, wherein a second sealing structure (7) is disposed between a root of each of the plurality of battery connection terminals (2) and the device body (1).

19. The connection apparatus applicable to the battery pack according to claim 17, wherein the first sealing structure (6) is a sealing gasket.

20. The connection apparatus applicable to the battery pack according to claim 17, wherein the device body (1) is in an interference fit with the battery pack.
